(19) Europäisches Patentamt
European Patent Office
Office européen des brevets

(11) **EP 1 926 337 A2**

(12) **EUROPEAN PATENT APPLICATION**

(43) Date of publication:
**28.05.2008 Bulletin 2008/22**

(51) Int Cl.:
*H04Q 7/38* (2006.01)

(21) Application number: **07022869.7**

(22) Date of filing: **26.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.11.2006 KR 20060117662**
**10.05.2007 KR 20070045682**

(71) Applicant: **Samsung Electronics Co., Ltd.**
**Suwon-si, Gyeonggi-Do (KR)**

(72) Inventors:
• **Yu, Jae-Chon**
**Suwon-si**
**Gyeonggi-do (KR)**
• **Lee, Ju-Ho**
**Suwon-si**
**Gyeonggi-do (KR)**

• **Kwon, Hwan-Joon**
**Suwon-si**
**Gyeonggi-do (KR)**
• **Han, Jin-Kyu**
**Suwon-si**
**Gyeonggi-do (KR)**
• **Lim, Yeon-Ju**
**Suwon-si**
**Gyeonggi-do (KR)**
• **Kim, Young-Taek**
**Suwon-si**
**Gyeonggi-do (KR)**
• **Jeong, Kyeong-In**
**Suwon-si**
**Gyeonggi-do (KR)**

(74) Representative: **Lang, Johannes**
**Bardehle Pagenberg Dost Altenburg Geissler,**
**Postfach 86 06 20**
**81633 München (DE)**

(54) **Method for performing cell selection in a mobile communication system and system therefor**

(57) A method for performing cell selection in a mobile communication system and a system therefor. Upon receiving a Multimedia Broadcast and Multicast Service (MBMS) service or a unicast service, a User Equipment (UE) performs cell search separately for each frequency band in an overlapping region between an MBMS-dedicated frequency band and a unicast service-available frequency band. In a first example, the UE allocates different cell identification codes for each cell according to types of the corresponding frequency bands to perform cell search. In a second example, the UE uses the system information broadcasted from the network over P-BCH to indicate whether each cell belongs to the MBMS-dedicated frequency band.

FIG.1

EP 1 926 337 A2

**Description**

BACKGROUND OF THE INVENTION

1. Field of the Invention

The present invention generally relates to a mobile communication system, and in particular, to a method for performing cell selection to receive broadcast services and unicast services in a mobile communication system and a system therefor.

2. Description of the Related Art

A Universal Mobile Telecommunications System (UMTS) system is a 3rd Generation (3G) asynchronous mobile communication system that employs Wideband Code Division Multiple Access (W-CDMA) based on Global System for Mobile Communications (GSM) and General Packet Radio Services (GPRS), both of which are European mobile communication systems. In 3rd Generation Partnership Project (3GPP) in charge of UMTS standardization, a Long Term Evolution (LTE) system is now under discussion as a next generation mobile communication system of the UMTS system. LTE is a technology for realizing packet-based communication at a high data rate of a maximum of about 100 Mbps (Megabits per second). To this end, several schemes are now under discussion including, for example, one scheme for reducing the number of nodes disposed in a communication path by simplifying the network configuration, and another scheme for maximally approximating radio protocols to radio channels.
Today, with the development of the communication technologies, services provided by mobile communication systems are evolving into Packet Service Communication for transmitting not only conventional voice services but also large-volume data, and into Multimedia Broadcast/Communication capable of transmitting multimedia services. To support Multimedia Broadcast/Communication, a discussion is now made on Multimedia Broadcast and Multicast Service (MBMS) service in which one or multiple multimedia data sources provide services to multiple User Equipments (UEs).
An MBMS service herein refers to a service for transmitting the same multimedia data to multiple recipients over a radio network. An MBMS service can save radio transmission resources by allowing multiple recipients to share one radio channel. An MBMS service needs a great amount of transmission resources, since the MBMS service supports transmission of multimedia data, such as real-time image and voice, still image, text, etc., and can simultaneously provide voice data and image data according to the type of the multimedia transmission. Because an MBMS service should transmit the same data to multiple cells where users are located, Point-to-Point (PtP) or Point-to-Multiple (PtM) connections are made according to the number of users located in each of the cells.
A broadcast service, such as an MBMS service, can use a broadcast service-dedicated frequency band or an MBMS-dedicated frequency band to provide higher broadcast quality. Unlike a unicast service-available frequency band or a unicast frequency band, which is available for providing not only broadcast service but also normal unicast service, the broadcast service-dedicated frequency band is used only for providing the broadcast service, and does not support Uplink (UL) transmission. When a UE has a desired broadcast service to receive, the UE can shift to the broadcast service-dedicated frequency band corresponding to the broadcast service through cell selection or reselection.
When the mobile communication system provides broadcast services over the broadcast service-dedicated frequency band, a UE, during cell selection or cell reselection (cell selection/reselection), selects a suitable cell having the highest signal strength for each subcarrier and camps on the selected suitable cell. If the suitable cell belongs to the broadcast service-dedicated frequency band, the UE cannot perform uplink signaling transmission for Routing Area Update (RAU), System Attach, etc. Therefore, for uplink signaling, the UE should reselect the cell belonging to the unicast service-available frequency band.
Therefore, there is a need to define an efficient cell selection/reselection operation for a UE for preventing the UE from unnecessarily camping on an unsuitable frequency band in a conventional mobile communication system that supports a broadcast service using a broadcast service-dedicated frequency band.

SUMMARY OF THE INVENTION

The present invention addresses at least the above-described problems and/or disadvantages and provides at least the advantages described below. Accordingly, an aspect of the present invention is to provide a method for allowing a UE to select a cell with a frequency band other than the broadcast service-dedicated frequency band during cell selection/reselection when the UE does not receive a broadcast service having the broadcast service-dedicated frequency band, and a system therefor.
Another aspect of the present invention is to provide a method for allowing a UE to preferentially select a unicast service-available frequency band during cell (re)selection of the UE in a mobile communication system employing a broadcast service-dedicated frequency band, and a system therefor.

According to an aspect of the present invention, there is provided a method for performing cell selection in a mobile communication system. The cell selection method includes determining whether there is a need to perform cell search for a broadcast service-dedicated frequency band for providing a dedicated broadcast service; performing cell search using cell identification codes of cells belonging to a unicast service-available frequency band when there is no need to perform cell search for the broadcast service-dedicated frequency band, except for cell identification codes allocated to cells belonging to the broadcast service-dedicated frequency band; and camping on a cell selected as a result of the cell search.

According to another aspect of the present invention, there is provided a mobile communication system including a network node, having multiple cells, for managing different combinations of cell identification codes allocated to cells belonging to a broadcast service-dedicated frequency band and cells belonging to a unicast service-available frequency band; and a UE for accessing the network node via at least one of the cells. The UE performs a cell search using cell identification codes of cells belonging to the unicast service-available frequency band when a determination is made that there is no need to perform a cell search for the broadcast service-dedicated frequency band, except for cell identification codes allocated to cells belonging to the broadcast service-dedicated frequency band.

According to a further aspect of the present invention, there is provided a method for performing cell selection in a mobile communication system. The cell selection method includes receiving system information broadcasted from a cell selected for cell selection/reselection over a Primary Broadcast Channel (P-BCH); determining whether the cell belongs to a broadcast service-dedicated frequency band depending on the system information; and camping on the selected cell when the cell does not belong to the broadcast service-dedicated frequency band.

According to yet another aspect of the present invention, there is provided a mobile communication system including a network node, having multiple cells, for broadcasting system information indicating whether each of the cells belongs to a broadcast service-dedicated frequency band over a P-BCH in the cells; and a UE for accessing the network node via at least one of the cells. The UE receives the system information broadcasted from a cell selected for cell selection/reselection, determines whether the selected cell belongs to a broadcast service-dedicated frequency band depending on the system information, and camps on the selected cell when the selected cell does not belong to the broadcast service-dedicated frequency band.

BRIEF DESCRIPTION OF THE DRAWINGS

The above and other aspects, features and advantages of the present invention will become more apparent from the following detailed description when taken in conjunction with the accompanying drawings in which:

FIG. 1    illustrates a configuration of a mobile communication system according to the present invention;
FIG. 2    illustrates a configuration of a mobile communication system for a broadcast service according to the present invention;
FIG. 3    illustrates a broadcast service-dedicated frequency band and a unicast service-available frequency band in a mobile communication system according to the present invention;
FIG. 4    illustrates an operation of a UE in a broadcast service-dedicated frequency band in a mobile communication system according to the present invention;
FIG. 5    illustrates an Attach procedure in a mobile communication system according to the present invention;
FIG. 6    illustrates a Routing Area Update (RAU) procedure in a mobile communication system according to the present invention;
FIG. 7    illustrates a Service Request procedure in a mobile communication system according to the present invention;
FIG. 8    illustrates a cell selection operation between a broadcast service-dedicated frequency band and a unicast service-available frequency band according to a first embodiment of the present invention; and
FIG. 9    illustrates a cell selection operation between a broadcast service-dedicated frequency band and a unicast service-available frequency band according to a second embodiment of the present invention.

DETAILED DESCRIPTION OF THE PREFERRED EMBODIMENTS

Preferred embodiments of the present invention will now be described in detail with reference to the drawings. In the following description, a detailed description of known functions and configurations incorporated herein has been omitted for clarity and conciseness.

The present invention, as described herein below, provides an efficient cell selection or cell reselection (cell selection/reselection) operation for a User Equipment (UE) in a mobile communication system supporting the broadcast service-dedicated frequency band and the unicast service-available frequency band.

For an example of the mobile communication system, reference will be made herein to the 3rd Generation

Partnership Project (3GPP) Long Term Evolution (LTE) system which is an evolved mobile communication system now under discussion in 3GPP, and for an example of the broadcast service, reference will be made herein to the Multimedia Broadcast and Multicast Service (MBMS) service also under discussion in 3GPP. However, the scope of the present invention is not intended to be limited to the above-stated standards and their system configurations, and application of efficient cell selection/reselection operation for a UE provided by the present invention to other mobile communication systems having similar technical background and system configuration with slight modification without departing from the scope of the present invention would be obvious to those skilled in the art.

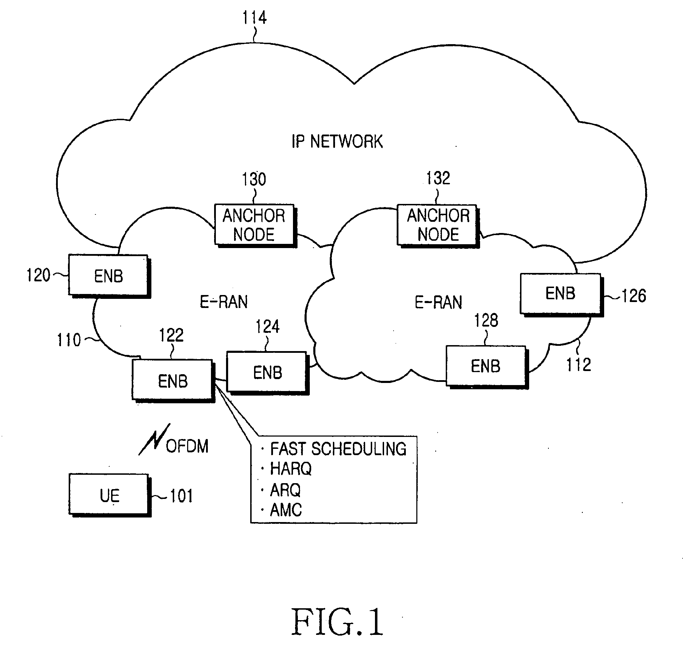

FIG. 1 shows a mobile communication system according to the present invention.

In FIG. 1, Evolved Universal Mobile Telecommunications System (UMTS) Radio Access Networks (E-RANs or E-UTRANs) 110 and 112 each are simplified into a 2-node configuration of Evolved Node Bs (ENBs) 120, 122, 124, 126 and 128, and anchor nodes 130 and 132. A UE 101, also known as a terminal, accesses an Internet Protocol (IP) network 114 by means of the E-RAN 110. The ENBs 120 to 128 correspond to the Node B of the typical UMTS system, and are connected to the UE 101 over radio channels.

The ENBs 120 to 128, compared with the existing Node B, perform the more complex function. Specifically, in LTE, because all user traffics including real-time services, such as Voice over IP (VoIP), are serviced over a shared channel, there is a need to collect status information of UEs and perform scheduling depending thereon, and this scheduling operation is managed by the ENBs 120 to 128. Commonly, each ENB controls multiple cells.

In addition, the ENB performs Adaptive Modulation & Coding (AMC) for adaptively determining a modulation scheme and a channel coding rate according to the channel status of the UE, and supports Hybrid Automatic Repeat reQuest (HARQ) like that in High Speed Downlink Packet Access (HSDPA), High Speed Uplink Packet Access (HSUPA), or Enhanced Dedicated Channel (E-DCH) of UMTS. Because various Quality-of-Service (QoS) conditions cannot be satisfied only with the HARQ, Outer ARQ in the upper layer can be performed between the UE 101 and the ENBs 120 to 128. The HARQ, as used herein, refers to a technique for soft-combining the previously received data with associated retransmitted data without discarding the previously received data, thereby increasing the reception success rate.

To realize the data rate of a maximum of 100 Mbps, LTE is expected to use Orthogonal Frequency Division Multiplexing (OFDM) as a radio access technology in a 20-MHz (MegaHertz) bandwidth.

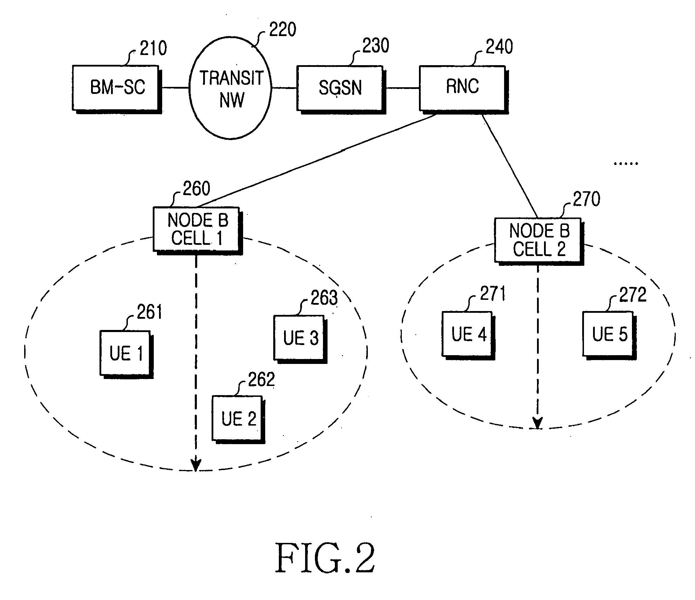

FIG. 2 shows an example of a mobile communication system for a broadcast service that shows an example of a UTRAN network that applies an MBMS service to the 3GPP system according to the present invention.

In FIG. 2, UEs 261, 262, 263, 271 and 272 each refer to a terminal apparatus or subscriber capable of receiving the MBMS service, and a cell #1 260 and a cell #2 270, geographical or logical areas where they radio-transmit MBMS-related data to the subscribers, are controlled by their associated ENB apparatuses, i.e. Node Bs. A Radio Network Controller (RNC) 240 controls radio resources of the cells 260 and 270, selectively transmits multimedia data to a particular cell, and controls radio channels established for providing the MBMS service. The connections between the RNC 240 and the UEs 261 to 272 are each called a Radio Resource Control (RRC) interface.

The RNC 240 is connected to a Packet Switched or Packet Service (PS) network such as the Internet by means of a Serving GPRS Support Node (SGSN) 230. The communication between the RNC 240 and the PS network is achieved by PS Signaling. In particular, the connection between the RNC 240 and the SGSN 230 is called an Iu-PS interface.

The SGSN 230 controls the MBMS-related services of the subscribers. The typical functions of the SGSN 230 include, for example, a function of managing the service billing-related data for each subscriber, and a function of selectively transmitting multimedia data to a particular RNC 240.

A Transit Network (NW) 220 provides a communication path between a Broadcast Multicast Service Center (BM-SC) 210 and the SGSN 230 for the MBMS service, and can be connected to the external network via a Gateway GPRS Support Node (GGSN), not shown. The BM-SC 210, a source of MBMS data, takes charge of scheduling the MBMS data. The MBMS data stream generated by the BM-SC 210 is delivered to the UEs 261, 262, 263, 271 and 272 via the Transit NW 220, the SGSN 230, the RNC 240, and the cells 260 and 270. The cells 260 and 270 each service at least one frequency band to provide the MBMS service and other services.

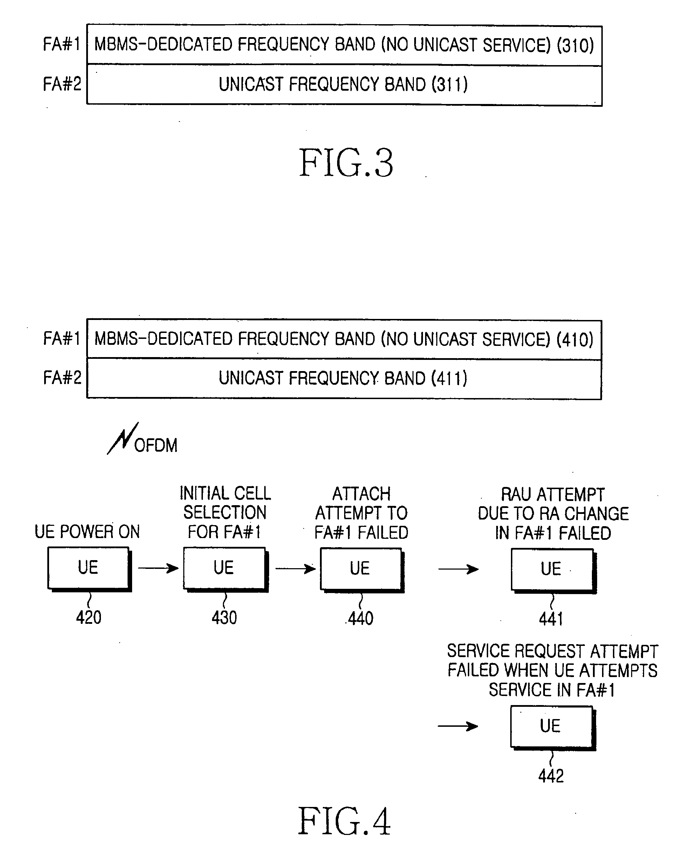

FIG. 3 illustrates a broadcast service-dedicated frequency band and a unicast service-available frequency band in a mobile communication system according to the present invention. The phrase 'unicast service-available frequency band', as used herein, refers to a frequency band in which a unicast service and a broadcast service are multiplexed. To multiplex the unicast service and the broadcast service, Time Division Multiplexing (TDM) or Frequency Division Multiplexing (FDM) can be used.

Referring to FIG. 3, Frequency Assignment (FA) #1 310 is an MBMS-dedicated frequency band, i.e. broadcast service-dedicated frequency band. In the FA#1 310, which is a band allocated for providing the MBMS service to the UEs attached (or connected) to the FA #1 310 on a dedicated basis, only the Downlink (DL) signal can be transmitted and the transmission of the Uplink (UL) signal or the unicast service is impossible. FA#2 311 is a normal frequency band other than the broadcast service-dedicated frequency band. In the FA#2 311, the transmission of not only the downlink signal but also the uplink signal is possible. That is, the FA#2 311, because most normal services are available therein, is called a unicast service-available frequency band.

FIG. 4 shows operation of a UE in a broadcast service-dedicated frequency band in a mobile communication system according to the present invention. FA#1 410 is an MBMS-dedicated frequency band in which the unicast service is unavailable, and FA#2 411 is a unicast service-available frequency band. A UE performs cell search in an overlapping region between the FA#1 410 and the FA#2 411 separately for each frequency band.

Referring to FIG. 4, in step 420, after power-on of the UE, the UE performs initial cell selection to the FA#1 410, or the broadcast service-dedicated frequency band having the higher received signal strength, and camps thereon. In step 430, the UE transmits an uplink signal for Attach attempt to the FA#1. However, because the FA#1 does not support the uplink transmission, the Attach attempt is failed in step 440. In step 441, upon detecting the entry into a new Routing Area (RA), the UE attempts a RAU operation in the FA#1, but the RAU operation is failed for the same reason. In step 442, even when the UE attempts to send a service request to the network to start a new service in the FA#1, the service request attempt is failed for the same reason.

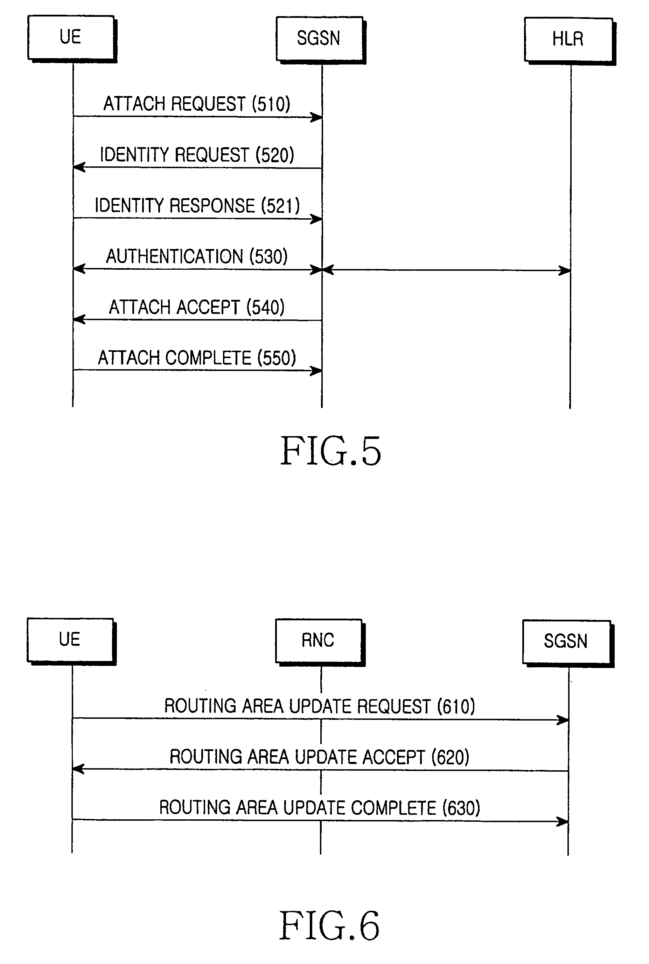

With reference to FIGS. 5 to 7, a description will now be made of a detailed procedure for uplink signaling transmission.

FIG. 5 illustrates an Attach procedure in a mobile communication system according to the present invention. The Attach procedure is performed when a UE first attaches to (or accesses) the network.

Referring to FIG. 5, in step 510, a UE sends an ATTACH REQUEST message to an SGSN to inform that the UE attempts data service attachment to the SGSN. In steps 520 and 521, the SGSN responds to the ATTACH REQUEST, and exchanges an IDENTITY REQUEST message and an IDENTITY RESPONSE message with the UE to acquire identification information (e.g. International Mobile Station Identity (IMSI), etc.) of the UE.

In step 530, the SGSN performs an Authentication process for the UE with a Home Location Register (HLR) to determine whether the UE can attach to the network and receive the service therefrom. After completing the Authentication process, the SGSN sends in step 540 an ATTACH ACCEPT message to the UE to inform that the Attach operation to the network by the UE has been completed. Then, in step 550, the UE finally reports the completion of the Attach procedure to the SGSN using an ATTACH COMPLETE message.

FIG. 6 illustrates a Routing Area Update (RAU) procedure in a mobile communication system according to the present invention.

Referring to FIG. 6, in step 610, a UE receives, from the network, RA information indicating to which RA the current cell belongs, and determines whether the UE has entered a new RA according to the RA information. When there is a change in the RA, i.e. when the UE has entered a cell belonging to another RA, the UE sends an RRC ROUTING AREA UPDATE REQUEST message for requesting the network to update the changed RA, to an SGSN via an RNC. In response to the ROUTING AREA UPDATE REQUEST message, the SGSN accepts the RAU using a ROUTING AREA UPDATE ACCEPT message in step 620. Thereafter, in step 630, the UE finally sends a ROUTING AREA UPDATE COMPLETE message to complete the RAU.

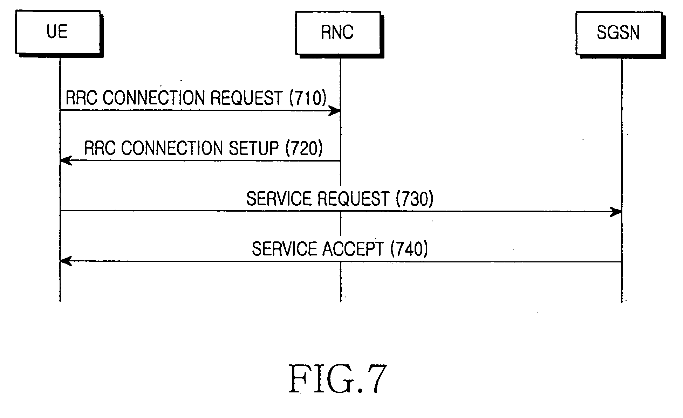

FIG. 7 illustrates a Service Request procedure in a mobile communication system according to the present invention.

Referring to FIG. 7, in steps 710 and 720, an RRC CONNECTION REQUEST message and an RRC CONNECTION SETUP message are exchanged between a UE and an RNC to establish an RRC connection. Thereafter, to start a new service, a SERVICE REQUEST message is transmitted from the UE to an SGSN in step 730. That is, in step 730, the UE sends the SERVICE REQUEST message to the SGSN to request the service that the UE desires to newly start, and the SERVICE REQUEST message includes a service type, an IMSI of the UE, etc. to indicate that the UE requests the service. In response thereto, the SGSN accepts in step 740 the start of the service to the UE using a SERVICE ACCEPT message.

In the foregoing procedures, when the UE is in the broadcast service-dedicated frequency band, because the uplink signal transmitted by the UE cannot be transmitted to the network, the uplink signaling is an unnecessary operation. Therefore, the present invention presents examples for preventing the unnecessary uplink signaling transmission from being performed in the broadcast service-dedicated frequency band. A first example of the present invention uses combinations of scrambling codes (e.g. Primary Synchronization Codes (PSC) and Secondary Synchronization Codes (SSC)) for cell identification used in the LTE system to designate the cells of the broadcast service-dedicated frequency band, thereby distinguish the broadcast service-dedicated frequency band from the unicast service-available frequency band. A second example uses the system information broadcasted from the network over a Primary Broadcast Channel (P-BCH) to indicate whether each cell belongs to the broadcast service-dedicated frequency band.

PSC and SSC are used herein as an example of the codes for cell identification in the first example of the present invention. Although not described in detail, scrambling codes or scrambling code sets may alternatively be used.

A description will now be made of PSC and SSC used in the first example of the present invention. The PSC, a sequence code forming a Primary Synchronization Channel (P-SCH), is generated based on a Zadoff-Chu (ZC) code, and is composed of repeated ZC codes. The PSCs include three PSCs for distinguishing three cell groups, and each PSC represents one cell group. Each PSC is mapped to 72 subcarriers so the associated PSC is symmetrically mapped to the upper and lower subcarriers based on a Direct Current (DC) subcarrier which is the center frequency.

The SSC, a sequence code forming a Secondary Synchronous Channel (S-SCH), is generated based on a binary code, and has a structure in which two short codes are combined. The SSCs indicate code information corresponding to each cell, two types of frame timing information, and information on the number of antennas to distinguish 170 cells. Therefore, the maximum number of possible hypotheses of SSCs is defined as follows.

$$170 \ (\text{Cell\_ID}) * 2 \ (\text{Frame\_Timing}) * N \ (\text{Number\_of\_Antennas})$$

Each SSC is mapped to 72 subcarriers so the associated SSC is symmetrically mapped to the upper and lower subcarriers based on the DC subcarrier. The PSC and SSC are located in different subframes within one frame.

According to the first example, to distinguish the cell belonging to the broadcast service-dedicated frequency band from the cell belonging to the unicast service-available frequency band, the network allocates combinations of different cell identification codes (e.g. PSC and SSC) to the cell belonging to the broadcast service-dedicated frequency band and the cell belonging to the unicast service-available frequency band. All cells including the broadcast service-dedicated frequency band are assumed herein to commonly use one combination of PSC and SSC (a PSC/SSC combination hereinafter). That is, the cells belonging to the broadcast service-dedicated frequency band use either one PSC/SSC combination or multiple PSC/SSC combinations included in a particular scope. At least one PSC/SSC combination used for the cells belonging to the broadcast service-dedicated frequency band is previously known to the UE.

When the UE does not desire to receive the broadcast service, the UE performs cell search using only the PSC/SSC combinations allocated to the cells belonging to the unicast service-available frequency band in a cell search process during initial cell selection and cell reselection. In this way, the UE can select the cell not-belonging to the broadcast service-dedicated frequency band.

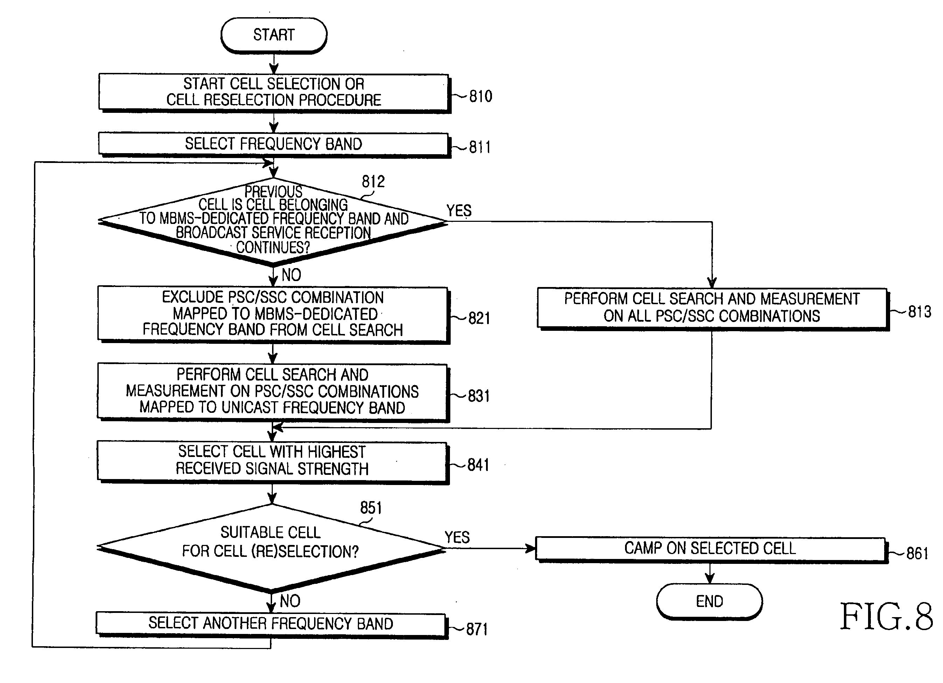

FIG. 8 illustrates an operation of selecting one cell from among a cell belonging to a broadcast service-dedicated frequency band and a cell belonging to a unicast service-available frequency band according to the first example of the present invention.

Referring to FIG. 8, in step 810, an initial cell selection procedure, or a cell reselection procedure due to the failure in the initial cell selection or a normal cell reselection procedure are started. In step 811, one frequency band is selected through the cell (re)selection procedure. In step 812, the UE determines whether the UE needs cell search for the broadcast service-dedicated frequency band. Specifically, when the initial cell selection/reselection procedure due to the failure in the initial cell selection is performed, the UE directly proceeds to step 821, determining that the UE does not need cell search for the broadcast service-dedicated frequency band. However, when the normal cell reselection procedure other than the procedure due to the failure in the initial cell selection is performed, the UE determines in step 812 whether previous the cell selected before the UE performs the cell reselection procedure belongs to the broadcast service-dedicated frequency band and the UE was receiving the broadcast service over the previous cell.

If the cell reselection procedure is being performed, the previous cell belongs to the broadcast service-dedicated frequency band and the UE was receiving the broadcast service over the previous cell, because the cell search should be performed not only for the unicast service-available frequency band but also for broadcast service-dedicated frequency band, the UE proceeds to step 813 where the UE performs cell search and measurement on all cell identification codes, i.e. scrambling code sets or all PSC/SSC combinations, and then proceeds to step 841. Otherwise, the UE proceeds to step 821.

If the initial cell selection, the cell reselection due to the failure in the initial cell selection, or the cell reselection before the broadcast service is received is performed, the UE removes in step 821 the cell identification codes mapped to the broadcast service-dedicated frequency band from a particular cell search target code list, and performs in step 831 cell search and measurement using the cell identification codes included in the cell search target list, i.e. scrambling code sets or PSC/SSC combinations, i.e. using the codes of the cells belonging to the predefined unicast service-available frequency band, and then proceeds to step 841. Specifically, the cell search refers to an operation of mapping the signal received from the network to the codes included in the cell search target list, and determining whether the strength of the mapped signal exceeds a particular threshold.

In step 841, the UE selects the highest-strength cell (or strongest cell) having the highest received signal strength as a result of the cell search and measurement, and determines in step 851 whether the highest-strength cell is a suitable cell where reception of a particular normal service is available. The UE can determine whether the highest-strength cell is the suitable cell depending on, for example, the system information broadcasted from the highest-strength cell. If the highest-strength cell is the suitable cell, the UE camps on the highest-strength cell in step 861. However, if the highest-strength cell is not a suitable cell, the UE proceeds to step 871 where the UE selects another frequency band, and then returns to step 812 and repeats the above steps.

Although the foregoing description has been made for the case where PSC/SSC combinations are used to distinguish the cells belonging to the broadcast service-dedicated frequency band, the other types of codes capable of distinguishing the cells, for example, the particular scrambling codes or scrambling code sets can be allocated to the cells of the broadcast service-dedicated frequency band.

According to a second example of the present invention, to distinguish the cell belonging to the broadcast service-dedicated frequency band from the cell belonging to the unicast service-available frequency band, the network provides information indicating whether each cell is a cell belonging to the broadcast service-dedicated frequency band using the system information broadcasted from each cell over P-BCH, i.e. using the P-BCH information. The UE, when not receiving the broadcast service in the broadcast service-dedicated frequency band, receives the system information broadcasted from the cell selected in the initial cell selection/reselection procedure, and determines whether the selected cell belongs to the broadcast service-dedicated frequency band. If the selected cell belongs to the broadcast service-dedicated frequency band, the UE does not camp on the selected cell. A format of the P-BCH information is shown in Table 1.

Table 1

| DL frequency band | Tx power of reference signal | MBSFN-related value | Number of transmit antennas | CRC |
|---|---|---|---|---|
| 4 bits | 0-6 bits | 0-9 bits | 1-2 bits | 16 bits |

The P-BCH information, as shown in Table 1, includes four fields and a Cyclic Redundancy Check (CRC) code, and the meaning of each field is defined as follows. The first field indicates a downlink frequency band of the system and includes 4 bits. The second field indicates transmission power of a reference signal (RS) with 0 to 6 bits, and means a ratio of the transmission power of the reference signal to the total power of the ENB. The third field, a Multicast/ Broadcast over Single Frequency Network (MBSFN)-related value, indicates a position of MBSFN frame and subframe with 0 to 9 bits. The MBSFN frame and subframe mean a particular frame in which the broadcast service is performed, and a particular subframe in the particular frame. The position of the particular frame/subframe is indicated by the MBSFN-related value. The fourth field indicates the number of transmit antennas with 1 to 2 bits. The fifth field is a 16-bit CRC for error correction of the preceding fields.

For example, one of bit combinations of the remaining four fields except for the CRC in the system information transmitted over P-BCH is used for designating a cell that uses the broadcast service-dedicated frequency band. For example, the P-BCH information in which bits of all fields are '0' indicates that the cell from which the P-BCH information is transmitted uses the broadcast service-dedicated frequency band. In this case, to indicate the cell using the broadcast service-dedicated frequency band, supplemental cell information (indicating the use/nonuse of the broadcast service-dedicated frequency band) can be provided using the above original fields without allocating supplemental bits or fields to the P-BCH information.

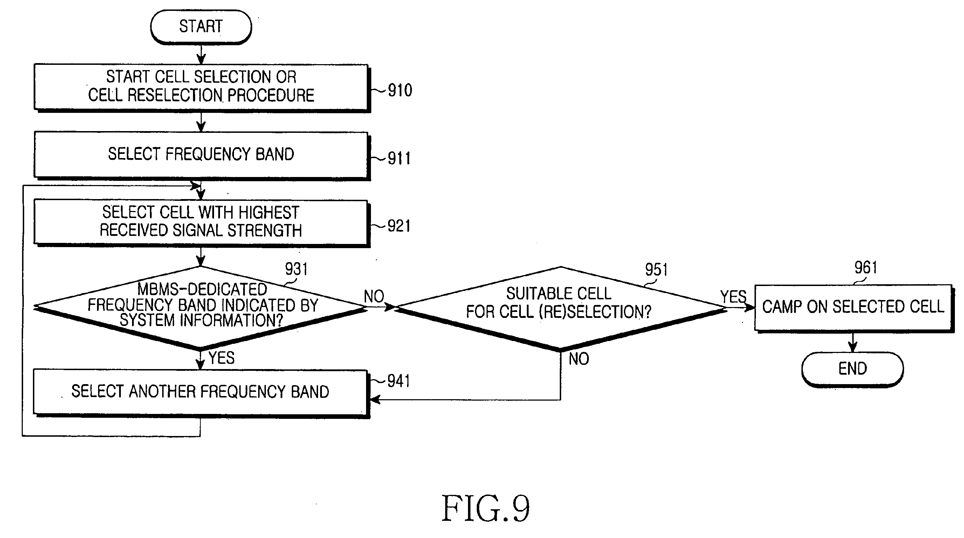

FIG. 9 illustrates an operation of selecting one cell from among a cell belonging to a broadcast service-dedicated frequency band and a cell belonging to a unicast service-available frequency band according to the second example of the present invention.

Referring to FIG. 9, in step 910, an initial cell selection/reselection procedure is started. In step 911, one frequency band is selected through the cell selection/reselection procedure. In step 921, a UE performs cell search and measurement on the cells of the selected frequency band, and then selects the highest-strength cell having the highest received signal strength. In step 931, the UE receives and parses fields of the system information (i.e. P-BCH information) broadcasted from the highest-strength cell, and determines whether the highest-strength cell belongs to the broadcast service-dedicated frequency band.

When the initial cell selection procedure has been performed and the highest-strength cell belongs to the broadcast service-dedicated frequency band, the UE directly proceeds to step 941. However, if the cell reselection procedure has been performed, the UE determines in step 931 whether the highest-strength cell belongs to the broadcast service-dedicated frequency band, the cell, referred to hereinafter as a previous cell, selected before the UE performs the cell reselection procedure belongs to the broadcast service-dedicated frequency band, and the UE was receiving the broadcast service over the previous cell. If the highest-strength cell belongs to the broadcast service-dedicated frequency band and the UE was not receiving the broadcast service in the previous cell, the UE proceeds to step 941 in the same way.

When the highest-strength cell does not belong to the broadcast service-dedicated frequency band, the previous cell belongs to the broadcast service-dedicated frequency band, and the UE was receiving the broadcast service over the previous cell, the UE proceeds to step 951 where the UE checks whether the highest-strength cell is a suitable cell where reception of a particular normal service is available. If the highest-strength cell is the suitable cell, the UE camps on the highest-strength cell in step 961. However, if the highest-strength cell is not the suitable cell, the UE proceeds to

**EP 1 926 337 A2**

step 941 where the UE selects another frequency band, and then returns to step 921 to re-perform the cell search.

As is apparent from the foregoing description, the present invention provides an efficient cell selection/reselection operation for a UE in a mobile communication system employing the broadcast service-dedicated frequency band for the broadcast service, thereby preventing the UE from failing in the uplink signaling transmission such as System Attach, Routing Area Update, Service Request, etc. in the unsuitable frequency band.

While the invention has been shown and described with reference to certain preferred embodiments thereof, it will be understood by those skilled in the art that various changes in form and details may be made therein without departing from the spirit and scope of the invention as defined by the appended claims.

**Claims**

1.   A method for performing cell selection in a mobile communication system, the method comprising:

   determining whether there is a need to perform a cell search for a broadcast service-dedicated frequency band for providing a dedicated broadcast service;
   performing a cell search using cell identification codes of cells belonging to a unicast service-available frequency band when there is no need to perform cell search for the broadcast service-dedicated frequency band, except for cell identification codes allocated to cells belonging to the broadcast service-dedicated frequency band; and
   camping on a cell selected as a result of the cell search.

2.   The method of claim 1, wherein the determining comprises:

   determining that there is no need to perform cell search for the broadcast service-dedicated frequency band, when initial cell selection is performed, cell reselection due to failure in the initial cell selection is performed, or cell reselection is performed in a state where the broadcast service is no longer received.

3.   The method of claim 1, further comprising:

   performing the cell search using cell identification codes allocated to cells belonging to the broadcast service-dedicated frequency band and the unicast service-available frequency band when there is a need to perform cell search for the broadcast service-dedicated frequency band and the unicast service-available frequency band.

4.   The method of claim 3, wherein the determining comprises:

   determining that there is a need to perform cell search for the broadcast service-dedicated frequency band and the unicast service-available frequency band, when cell reselection is performed, a previous cell where a User Equipment (UE) is located before the cell reselection is performed belongs to the broadcast service-dedicated frequency band, and the UE was receiving the broadcast service in the previous cell.

5.   The method of claim 1, wherein the performing a cell search comprises:

   selecting a highest-strength cell having a highest received signal strength as a result of the cell search;
   determining to camp on the highest-strength cell when the highest-strength cell is a suitable cell for cell selection/ reselection; and
   re-performing cell selection/reselection on another frequency band when the highest-strength cell is not a suitable cell.

6.   The method of claim 1, wherein different combinations of cell identification codes are allocated to cells belonging to the broadcast service-dedicated frequency band and cells belonging to the unicast service-available frequency band.

7.   The method of claim 1, wherein each of the cell identification codes is a scrambling code allocated to identify each cell.

8.   A mobile communication system comprising:

   a network node, including multiple cells, for managing different combinations of cell identification codes allocated to cells belonging to a broadcast service-dedicated frequency band and cells belonging to a unicast service-available frequency band; and
a User Equipment (UE) for accessing the network node via at least one of the cells;

wherein the UE performs cell search using cell identification codes of cells belonging to the unicast service-available frequency band when a determination is made that there is no need to perform cell search for the broadcast service-dedicated frequency band, except for cell identification codes allocated to cells belonging to the broadcast service-dedicated frequency band.

9. The mobile communication system of claim 8, wherein the UE determines that there is no need to perform a cell search for the broadcast service-dedicated frequency band, when initial cell selection is performed, cell reselection due to failure in the initial cell selection is performed, or cell reselection is performed in a state where the broadcast service is no longer received.

10. The mobile communication system of claim 8, wherein the UE performs cell search using cell identification codes allocated to cells belonging to the broadcast service-dedicated frequency band and the unicast service-available frequency band when there is a need to perform cell search for the broadcast service-dedicated frequency band and the unicast service-available frequency band.

11. The mobile communication system of claim 10, wherein the UE determines that there is a need to perform cell search for the broadcast service-dedicated frequency band and the unicast service-available frequency band, when cell reselection is performed, a previous cell where the UE is located before the cell reselection is performed belongs to the broadcast service-dedicated frequency band, and the UE was receiving the broadcast service in the previous cell.

12. The mobile communication system of claim 8, wherein the UE;
selects a highest-strength cell having a highest received signal strength as a result of the cell search;
determines to camp on the highest-strength cell when the highest-strength cell is a suitable cell for cell selection/reselection; and
re-performs cell selection/reselection on another frequency band when the highest-strength cell is not a suitable cell for cell selection/reselection.

13. The mobile communication system of claim 8, wherein each of the cell identification codes is a scrambling code allocated to identify each cell.

14. A method for performing cell selection in a mobile communication system, the method comprising:

receiving system information broadcasted from a cell selected for cell selection/reselection over a Primary Broadcast Channel (P-BCH);
determining whether the cell belongs to a broadcast service-dedicated frequency band depending on the system information; and
camping on the selected cell when the cell does not belong to the broadcast service-dedicated frequency band.

15. The method of claim 14, further comprising:

performing cell selection/reselection on another frequency band, when the selected cell belongs to the broadcast service-dedicated frequency band, initial cell selection is performed, or a User Equipment (UE) was not receiving the broadcast service in the previous cell.

16. The method of claim 14, wherein the determining comprises:

determining whether the selected cell belongs to the broadcast service-dedicated frequency band depending on whether all bits of the system information are coincident with a particular bit sequence.

17. A mobile communication system comprising:

a network node, including multiple cells, for broadcasting system information indicating whether each of the cells belongs to a broadcast service-dedicated frequency band over a Primary Broadcast Channel (P-BCH) in the cells; and
a User Equipment (UE) for accessing the network node via at least one of the cells;

wherein the UE receives the system information broadcasted from a cell selected for cell selection/reselection, determines whether the selected cell belongs to a broadcast service-dedicated frequency band depending on the system information, and camps on the selected cell when the selected cell does not belong to the broadcast service-dedicated frequency band.

18. The mobile communication system of claim 17, wherein the UE performs cell selection/reselection on another frequency band, when the selected cell belongs to the broadcast service-dedicated frequency band, initial cell selection is performed, or the UE was not receiving the broadcast service in the previous cell.

19. The mobile communication system of claim 17, wherein the UE determines whether the selected cell belongs to the broadcast service-dedicated frequency band depending on whether all bits of the system information are coincident with a particular bit sequence.

FIG.1

FIG.2

EP 1 926 337 A2

| FA#1 | MBMS-DEDICATED FREQUENCY BAND (NO UNICAST SERVICE) (310) |
|------|------|
| FA#2 | UNICAST FREQUENCY BAND (311) |

# FIG.3

| FA#1 | MBMS-DEDICATED FREQUENCY BAND (NO UNICAST SERVICE) (410) |
|------|------|
| FA#2 | UNICAST FREQUENCY BAND (411) |

$\mathcal{N}$OFDM

UE POWER ON

INITIAL CELL SELECTION FOR FA#1

ATTACH ATTEMPT TO FA#1 FAILED

RAU ATTEMPT DUE TO RA CHANGE IN FA#1 FAILED

UE → UE → UE → UE

420    430    440    441

SERVICE REQUEST ATTEMPT FAILED WHEN UE ATTEMPTS SERVICE IN FA#1

→ UE

442

# FIG.4

| UE | | SGSN | | HLR |
|---|---|---|---|---|

ATTACH REQUEST (510)

IDENTITY REQUEST (520)

IDENTITY RESPONSE (521)

AUTHENTICATION (530)

ATTACH ACCEPT (540)

ATTACH COMPLETE (550)

## FIG.5

| UE | | RNC | | SGSN |
|---|---|---|---|---|

ROUTING AREA UPDATE REQUEST (610)

ROUTING AREA UPDATE ACCEPT (620)

ROUTING AREA UPDATE COMPLETE (630)

## FIG.6

FIG.7

START

START CELL SELECTION OR
CELL RESELECTION PROCEDURE ~810

SELECT FREQUENCY BAND ~811

PREVIOUS
CELL IS CELL BELONGING
TO MBMS-DEDICATED FREQUENCY BAND AND 812
BROADCAST SERVICE RECEPTION
CONTINUES?

YES → PERFORM CELL SEARCH AND MEASUREMENT
ON ALL PSC/SSC COMBINATIONS ~813

NO

EXCLUDE PSC/SSC COMBINATION
MAPPED TO MBMS-DEDICATED
FREQUENCY BAND FROM CELL SEARCH ~821

PERFORM CELL SEARCH AND
MEASUREMENT ON PSC/SSC COMBINATIONS
MAPPED TO UNICAST FREQUENCY BAND ~831

SELECT CELL WITH HIGHEST
RECEIVED SIGNAL STRENGTH ~841

SUITABLE CELL
FOR CELL (RE)SELECTION? 851

YES → CAMP ON SELECTED CELL ~861

END

NO

SELECT ANOTHER FREQUENCY BAND ~871

EP 1 926 337 A2

16

FIG.8

EP 1 926 337 A2

```
                    ┌─────────────┐
                    │    START    │
                    └──────┬──────┘
                           │
           ┌───────────────▼───────────────┐
           │   START CELL SELECTION OR      │~910
           │  CELL RESELECTION PROCEDURE    │
           └───────────────┬───────────────┘
                           │
           ┌───────────────▼───────────────┐
           │    SELECT FREQUENCY BAND       │~911
           └───────────────┬───────────────┘
                           │
           ┌───────────────▼───────────────┐
           │   SELECT CELL WITH HIGHEST     │~921
           │   RECEIVED SIGNAL STRENGTH     │
           └───────────────┬───────────────┘
```

SELECT CELL WITH HIGHEST RECEIVED SIGNAL STRENGTH — 921

931 — MBMS-DEDICATED FREQUENCY BAND INDICATED BY SYSTEM INFORMATION?

NO

951 — SUITABLE CELL FOR CELL (RE)SELECTION?

YES

961 — CAMP ON SELECTED CELL

YES

SELECT ANOTHER FREQUENCY BAND ~941

NO

END

FIG.9